# EUROPÄISCHE PATENTSCHRIFT

(11) **EP 0 877 504 B1**
(45) Veröffentlichungstag und Bekanntmachung des Hinweises auf die Patenterteilung: **20.09.2006**
(21) Anmeldenummer: 98105273.1
(22) Anmeldetag: 24.03.1998
(51) Int. Cl.: H04L 5/06, H04L 27/26, H04J 11/00, H04H 1/00, H04L 5/02

(54) **Verfahren zur Übertragung von Daten, sowie Sender und Empfänger**
Method for data transmission as well as transmitter and receiver
Procédé de transmission de données, transmetteur et récepteur

(30) Priorität: 10.05.1997 DE 19719762
(43) Veröffentlichungstag der Anmeldung: 11.11.1998
(73) Patentinhaber: ROBERT BOSCH GMBH, 70442 Stuttgart (DE)
(72) Erfinder: Amor, Hamed, 31139 Hildesheim (DE); Ruf, Michael, 31141 Hildesheim (DE); Schmale, Bernd, 31137 Hildesheim (DE); Stepen, Markus, 31137 Hildesheim (DE); Bolle, Michael, 30880 Laatzen (DE); Dierkes, Volkmar, 31180 Giesen (DE)

(56) Entgegenhaltungen:
- EP-A- 0 666 661
- EP-A- 0 762 703
- WO-A-92/20179

## Beschreibung

### Stand der Technik

Die Erfindung geht aus von einem Verfahren, sowie einem Sender und Empfänger nach der Gattung der unabhängigen Ansprüche.

Aus der Broschüre "Digital Audio Broadcasting" Eureka 147 Projekt, April 1996, ist bekannt, Daten mit Hilfe sogenannter DAB-Ensembles zu übertragen. Ein DAB-Ensemble entspricht einem übertragenen Signal, das aus einem Satz benachbarter, orthogonaler Trägerfrequenzen um eine Mittenfrequenz f besteht. Das DAB-Ensemble wird als Einheit gesendet, empfangen und verarbeitet.
Ein DAB-Ensemble besitzt eine Bandbreite von 1,5 MHz, die für eine Datenübertragungsrate von ca. 1,8 MBit pro Sekunde ausreicht. Möchte man mit den bekannten DAB-Übertragungsverfahren Multimediadienste an mobile Empfänger übertragen, so ist es für einige Anwendungen sinnvoll, zum Beispiel bei der Bewegtbild-Übertragung mit MPEG-2 oder MPEG-4 codierten Bildern, diese Datenrate weiter zu erhöhen.

### Vorteile der Erfindung.

Das erfindungsgemäße Verfahren mit den kennzeichnenden Merkmalen des unabhängigen Anspruchs hat demgegenüber den Vorteil, daß durch einen Verbund mehrere DAB-Ensembles, die parallel gesendet werden, für Multimediadienste wesentlich höhere Datenraten zur Verfügung stehen. Dabei bleiben die Vorteile der DAB-Übertragung als flexibles und robustes Übertragungssystem erhalten. Außerdem ist es möglich, bereits bestehende Sender- und Empfängertechnologien, sowie Senderinfrastrukturen zu benutzen. Besonders vorteilhaft ist die flexible Nutzung der knappen Frequenzbandbreiten. Das Verfahren erlaubt eine gleichzeitige Nutzung mehrerer, schmaler freier Frequenzbereiche, die insgesamt eine hohe Datenübertragungsrate ermöglichen.

Durch die in den Unteransprüchen aufgeführten Maßnahmen ist eine vorteilhafte Weiterbildung und Verbesserung des im unabhängingen Anspruch angegebenen Verfahrens möglich. Besonders vorteilhaft ist es, daß die DAB-Ensembles in schmalen freien Frequenzbändern, die nicht zusammenhängen müssen, gesendet werden können. Weiterhin ist es von Vorteil, daß DAB-Ensembles in verschiedenen Übertragungsmodi moduliert und gesendet werden können. Damit ist eine weitere Flexibilisierung der Datenrate möglich.

Der erfindungsgemäße Sender mit den kennzeichnenden Merkmalen des unabhängigen Anspruchs hat den Vorteil, daß die Datenströme im DAB-Multiplexer mit Hilfe eines Demultiplexers in mehrere Ensembles aufgeteilt werden. Damit ist es möglich, sehr hohe Datenraten in einem solchen Sender zu verarbeiten.

Vorteilhafterweise enthält der Sender einen COFDM-Encoder, der die getrennten Ensembles getrennt codiert.
Der erfindungsgemäße Empfänger mit den kennzeichnenden Merkmalen des unabhängigen Anspruchs hat den Vorteil, daß die Empfangseinheit Bandpaßfilter enthält, über die eine Trennung der Ensembles möglich ist. In einer möglichen Ausführungsform ist ein Analog-Digitalwandler für jedes Ensemble getrennt vorhanden.
In einer weiteren Ausführungsform wird ein gemeinsamer Analog-Digitalwandler für alle Ensembles verwendet. Die Trennung der Ensembles erfolgt vorteilhafterweise über Basisbandfilter.

### Zeichnung

Ausführungsbeispiele der Erfindung sind in der Zeichnung dargestellt und in der nachfolgenden Beschreibung näher erläutert. Es zeigt die Figur 1 einen Sender, die Figur 2 einen Empfänger mit getrennter Analog-Digitalwandlung und Figur 3 einen Empfänger mit gemeinsamer Analog-Digitalwandlung.

### Beschreibung des Ausführungsbeispiels

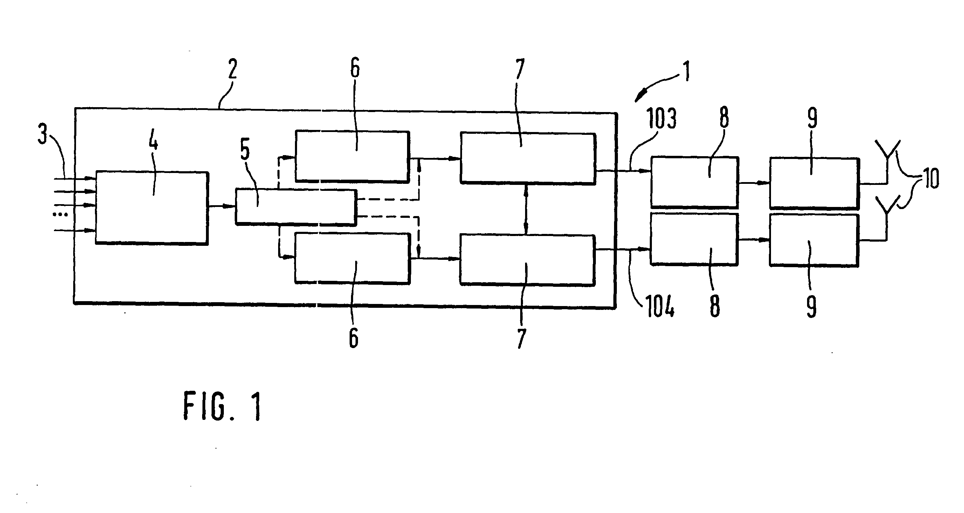

Figur 1 zeigt die Komponenten eines Senders 1. Der Multiplexer 2 ist mit den COFDM (Coded Orthogonal Frequency Division Multiplex)-Encodern 8 und mit den DAB-Sendern 9 verbunden. Die Ausgänge der DAB-Sender 9 sind mit den Antennen 10 verbunden. In Multiplexer 2 befindet sich eingangseitig eine Paketierungs-Einheit 4, die mit einem Demultiplexer 5 verbunden ist. Der Demultiplexer 5 steht in Verbindung mit den Fehlerschutzcodierern 6 und mit Eingängen der DAB-Ensemble-Multiplexer 7.

Ausgehend von beispielsweise einem MPEG-Kodierer werden mehrere Datenströme 3 in den Multiplexer 2 eingespeist. Die Datenströme durchlaufen zuerst den Paketierer 4, in dem sie in Datenpakete aufgeteilt werden, damit eine einfachere Verteilung der Daten auf mehrere Ensembles möglich ist. Zusätzlich werden im Paketierer 4 diesen Datenpaketen Zusatzinformationen zugeordnet. Diese Informationen werden im Empfänger verwendet, um die Datenpakete wieder in richtiger Reihenfolge zu einem Datenstrom zusammenzusetzen. Besteht der Datenstrom 3 bereits aus Datenpaketen kann die Paketierung entfallen, wobei jedoch im allgemeinen die Zusatzinformation über die Paketreihenfolge hinzugefügt oder verändert werden muß. Zusätzlich hat der Paketierer 4 die Aufgabe, Informationen über die Gesamtheit der Ensembles einzuspeisen und Synchronisationsworte einzufügen. Zu diesem Zweck werden im Fast Information Channel (FIC) oder einem sonstigen geeigneten Kanal eines der Ensembles oder beider Ensembles, die Sendung mehrerer Ensembles und die zum Empfang notwendigen Informationen, wie zum Beispiel die benutzten Ensemblefrequenzen signalisiert. Im Demultiplexer 5 wird der mit den Zusatzinformationen versehene Datenstrom in die verschiedenen Ensemblezweige aufgeteilt. Es ist sinnvoll, vor der Übertragung der Signale eine zusätzliche Fehlerschutzcodierung im Multiplexer 2 durchzuführen. Zum Beispiel werden die DAB-Ensembles in den Fehlerschutzcodierern 6 mit einer zusätzlichen Reed-Solomon-Codierung versehen. Das erste Ensemble 103 und das zweite Ensemble 104 werden vom Multiplexer an die COFDM-Encoder 8 weitergegeben. In diesen Encodern 8 werden die Ensembles jeweils getrennt codiert. Die Ausgänge der COFDM-Encoder liegen an den DAB-Sendern 9 an, die die DAB-Ensembles auf der jeweiligen Frequenz über die Antennen 10 senden. In diesem Ausführungsbeispiel werden zwei COFDM-Encoder 8 verwendet, wie sie bei der Standard-DAB-Übertragung zur Anwendung kommen. Es ist aber auch möglich, einen einzigen, erweiterten Encoder zu verwenden. Das entstehende COFDM-Signal jedes DAB-Ensembles wird auf die gewünschte Senderfrequenz gemischt und verstärkt abgestrahlt.

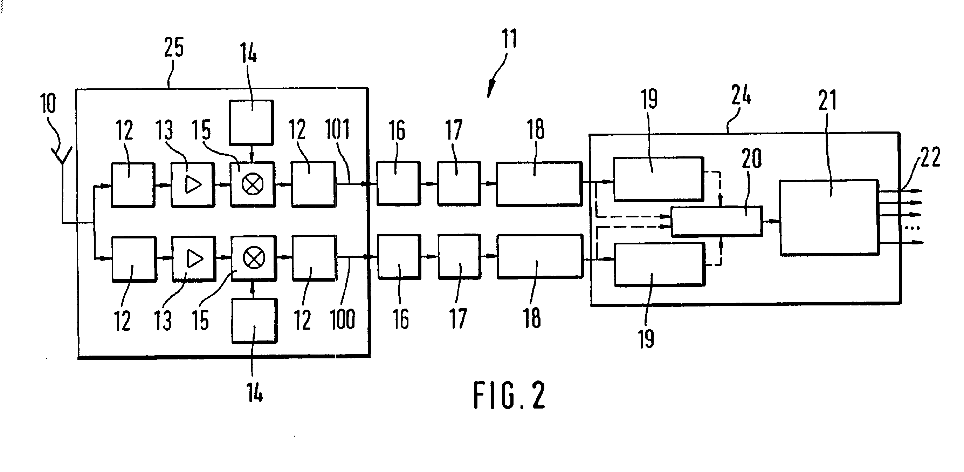

Figur 2 zeigt den Aufbau eines Empfängers 11. Die Antenne 10 ist mit der Empfangseinheit 25 verbunden. Der Ausgang der Empfangseinheit 25 liegt an Analog-Digitalwandlern 16 an, die ausgangseitig mit Basisbandfiltern 17 und COFDM-Decodern 18 verbunden sind. Der Ausgang der COFDM-Decoder 18 liegt eingangseitig am DAB-Demultiplexer 24 an. Die Empfangseinheit 25 beinhaltet Bandpaßfilter 12, die eingangseitig mit der Antenne 10 verbunden sind. Die Ausgänge der Bandpaßfilter 12 sind mit den Eingängen von Verstärkern 13 verbunden die ihrerseits mit Mischhern 15 in Verbindung stehen, die mit Ausgängen von lokalen Oszillatoren 14 verbunden sind. Die Ausgänge der Mischer 15 stehen in Verbindung mit Bandpaßfiltern 12, die ausgangseitig an Analog-Digitalwandler 16 angeschlossen sind. Der DAB-Demultiplexer 24 besteht aus Fehlerschutzdecodierern 19, deren Ausgänge mit einem Empfangs-Multiplexer 20 verbunden sind, wobei der Empfangs-Multiplexer 20 ausgangseitig mit der Depaketierung 21 in Verbindung steht.

Das von der Antenne 10 empfangene Signal wird in zwei Verarbeitungszweige eingespeist. Dabei wird zunächst in den Bandpaßfiltern eine Bandpaßfilterung entsprechend den beiden Ensemblefrequenzen durchgeführt. Die gefilterten Signale werden anschließend in Verstärker 13 verstärkt und mithilfe zweier lokaler Oszillatoren 14 auf eine erste Zwischenfrequenz 100 und eine zweite Zwischenfrequenz 101 gemischt. In der erster Ausführungsform sind die Oszillatoren 14 so eingestellt, daß die beiden Zwischenfrequenzen identisch sind. Dann müssen zur weiteren Verarbeitung der analogen, gefilterten Signale zwei Analog-Digitalwandler 16 vorhanden sein. Die Zwischenfrequenzsignale 100 und 101 werden in den Analog-Digitalwandlern 16 abgetastet und anschließend jeweils den Basisbandfiltern 17 zugeführt, die zur Erzeugung des komplexen Basisbandsignals dienen. Anschließend werden die Signale den COFDM-Decodern 18 zugeführt, in denen die DAB-Kanaldecodierung realisiert wird. Die decodierten Datenströme werden den DAB-Demultiplexer 24 zugeführt. Der DAB-Demultiplexer 24 setzt die Datenströme über die Fehlerschutzdecodierer 19 und den Empfangs-Multiplexer 20 wieder zu einem gemeinsamen Datenstrom zusammen. Anschließend wird in der Depaketierung 21 die im Sender durchgeführte Paketierung rückgängig gemacht und der zusätzliche Fehlerschutz decodiert.
Man erhält schließlich die decodierten Datenströme 22, die den im Sender in den Demultiplexer eingespeisten Datenströme 3 entsprechen.

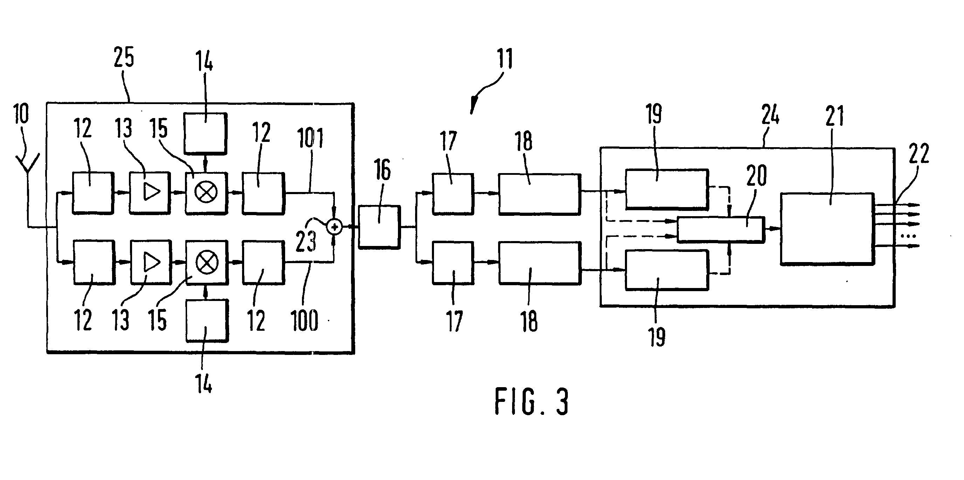

Figur 3 zeigt den schematischen Aufbau eines weiteren Ausführungsbeispiels eines Empfängers. Dabei entspricht die Empfangseinheit 24 der bereits in Figur 2 beschriebenen Empfangseinheit, wobei die beiden Zwischenfrequenzsignale 100 und 101 an einer Summenbildung 23 zusammengeführt werden. Die Summenbildung ist mit einem Analog-Digitalwandler 16 mit nachfolgenden Basisbandfiltern 17 und COFDM-Decodern 18 verbunden. Der DAB-Demultiplexer 24 entspricht ebenfalls der bereits in Figur 2 ausgeführten Form.

Die Ausführungsform nach Figur 3 wird realisiert, wenn in den lokalen Oszillatoren 14 unterschiedliche Oszillatorfrequenzen eingestellt sind. Dadurch sind die beiden Zwischenfrequenzen 100 und 101 ungleich. Für das Verarbeiten der Zwischenfrequenzen ist zu beachten, daß sich die Spektren der beiden Zwischenfrequenzsignale nicht überlappen. Die beiden Zwischenfrequenzsignale 100 und 101 werden in der Summenbildung 23 addiert und gemeinsam in einem Analog-Digitalwandler 16 umgesetzt. Vorteilhafterweise ist hier lediglich ein Analog-Digitalwandler 16 notwendig. Die abgetasteten Signale werden daraufhin Basisbandfiltern 17 zugeführt, die das jeweilige Basisbandsignal erzeugen und anschließend dem COFDM-Decoder 18 zuführen.

Es sind noch weitere Ausführungsvarianten des erfindungsgemäßen Empfängers möglich, bei denen der Realisierungsaufwand für die parallel vorhandenen Blöcke der Basisbandfilter 17 und der COFDM-Decoder 18 reduziert werden. Die Basisbandfilter 17 können beispielsweise durch ein einziges Filter ersetzt werden, welches mit doppeltem Takt betrieben wird, um die beiden Signalzweige im Zeitmultiplexverfahren abzuarbeiten. Ähnliches gilt für den COFDM-Decoder. Auch hier lassen sich die Blöcke, wie die diskrete Fourier-Transformation, die differentiale Decodierung, die Viterbi-Decodierung und das Zeitdeinterleaving im Zeitmultiplex- Verfahren bearbeiten.

Bei der Empfängersynchronisation bezüglich der Frequenz und der Zeit kann man den Rechenaufwand vermindern, indem nicht beide Synchronisationssymbole, die in den Ensembles enthalten sind, analysiert werden müssen. Wenn im Sender die beide Ensembles zeitsynchron abgestrahlt werden, so lassen sich beide Ensembles nach der Zeitsynchronisation auf lediglich eines der Ensembles korrekt empfangen. Sind weiterhin die Mischeroszillatoren im Analogteil des Empfängers miteinander gekoppelt, so erlaubt die Berechnung der Frequenzabweichung aus dem einem Ensemble direkte Rückschlüsse auf die Frequenzabweichung des anderen.

Die in den Ausführungsbeispielen dargestellte Beschränkung auf zwei DAB-Ensembles ist nicht notwendig. Es ist möglich, einen Verbund von n-DAB-Ensembles zu übertragen, was eine Nettodatenrate von bis zu n x 1,8 MBit pro Sekunde erlaubt. Es bleibt dabei die durch die DAB-Übertragung ermöglichte dynamische und flexible Zuordnung von Übertragungskapazität innerhalb der Ensemble voll erhalten.
Im allgemeinen können mehrere nicht notwendigerweise benachbarte DAB-Ensembles benutzt werden und sie müssen auch nicht im gleichen Übertragungsmodus ausgestrahlt werden.

## Patentansprüche

1. Verfahren zur Übertragung von Daten mit einem Multiträgerübertragungsverfahren, wobei die Daten auf ein Ensemble orthogonaler Träger mit geringem Trägerabstand mit einer Mittenfrequenz f aufmoduliert werden, **dadurch gekennzeichnet, dass** die Daten eines Signals aufgeteilt werden und über mindestens zwei Ensembles mit unterschiedlichen Mittenfrequenzen und einem Abstand der Mittenfrequenzen, der größer als die verwendete Bandbreite der jeweiligen Ensembles ist, parallel gesendet werden, wobei ferner Zusatzinformationen über die Aufteilung gesendet werden, mit deren Hilfe das Datensignal empfängerseitig zusammengesetzt werden kann.

2. Verfahren zur Übertragung von Daten nach Anspruch 1, **dadurch gekennzeichnet, dass** die Mittenfrequenzen der mindestens zwei Ensembles in unterschiedlichen Frequenzbändern liegen.

3. Verfahren zur Übertragung von Daten nach Anspruch 1 oder 2, **dadurch gekennzeichnet, dass** die mindestens zwei Ensembles unterschiedlich moduliert werden und/oder unterschiedliche Anzahl an orthogonalen Trägern aufweisen.

4. Verfahren zur Übertragung von Daten nach Anspruch 1 bis 3, **dadurch gekennzeichnet, dass** Informationen über Aufteilung der Daten und Mittenfrequenzen der Ensembles über einen getrennten Kanal übertragen werden.

5. Verfahren zur Übertragung von Daten nach Anspruch 1 bis 4, **dadurch gekennzeichnet, dass** die Synchronisation im Empfänger auf mindestens eines der parallel übertragenen Ensembles erfolgt.

6. Sender (1) zur Übertragung von Daten mit einem Multiträgerübertragungsverfahren, wobei die Daten auf ein Ensemble orthogonaler Träger mit geringem Trägerabstand mit einer Mittenfrequenz f aufmoduliert werden, wobei der Sender einen Multiplexer (2), einen mit ihm verbundenen COFDM-Enkoder (8) und eine mit dem Enkoder verbundene Sendeeinheit (9) enthält, **dadurch gekennzeichnet, dass** der Multiplexer (2) einen Demultiplexer (5) enthält, der die Datenströme zwecks Übertragung über mindestens zwei Ensembles teilt, wobei der Sender Mittel enthält, die die mindestens zwei Ensembles mit unterschiedlichen Mittenfrequenzen und einem Abstand der Mittenfrequenzen der größer als die verwendete Bandbreite der jeweiligen Ensembles ist, parallel senden, und wobei der Sender Mittel zum Senden von Zusatzinformationen über die Aufteilung aufweist, mit deren Hilfe das Datensignal empfängerseitig zusammengesetzt werden kann.

7. Sender zur Übertragung von Daten nach Anspruch 6, **dadurch gekennzeichnet, dass** der COFDM-Enkoder (8) getrennte Kodiereinheiten für jeweils ein Ensemble enthält.

8. Empfänger (11) zum Empfang von übertragenen Daten mit einem Multiträgerübertragungsverfahren, wobei die Daten auf ein Ensemble orthogonaler Träger mit geringem Trägerabstand mit einer Mittenfrequenz f aufmoduliert werden, wobei der Empfänger (11) eine Empfangseinheit (25), einen mit ihr verbundenen Analog-Digitalwandler (16), einen COFDM-Dekoder (18) und einen mit dem Dekoder (18) verbundenen DAB-Demultiplexer (24) enthält, **dadurch gekennzeichnet, dass** die Empfangseinheit (24) derart ausgestaltet ist, dass sie einen auf mindestens zwei Ensembles aufgeteilten Datenstrom sowie Zusatzinformationen empfängt, und dass sie mindestens Bandpaßfilter (12) zur Trennung der Ensembles enthält und Mittel aufweist, die den Datenstrom mit Hilfe der Zusatzinformationen zusammensetzt.

9. Empfänger (11) zum Empfang von übertragenen Daten nach Anspruch 8, **dadurch gekennzeichnet, dass** er Analog-Digitalwandler (16) für die jeweiligen Ensembles getrennt enthält.

10. Empfänger (11) zum Empfang von übertragenen Daten nach Anspruch 8 oder 9, **dadurch gekennzeichnet, dass** er einen Analog-Digitalwandler (16) für alle Ensembles gemeinsam enthält und dass zur Trennung der Ensembles ein Basisbandfilter (17) für jeweils ein Ensemble eingebaut ist.

11. Empfänger (11) zum Empfang von übertragenen Daten nach Anspruch 8 bis 9 , **dadurch gekennzeichnet, dass** ein Basisbandfilter (17), das im Zeitmultiplexverfahren alle Ensembles verarbeitet, eingebaut ist.

12. Empfänger (11) zum Empfang von übertragenen Daten nach Anspruch 8 bis 11, **dadurch gekennzeichnet, dass** die Oszillatoren (14) miteinander gekoppelt sind.

## Claims

1. Method for transmitting data using a multicarrier transmission method, where the data are modulated onto a set of orthogonal carriers with a short carrier interval with a centre frequency f, **characterized in that** the data in a signal are split and are sent in parallel using at least two sets with different centre frequencies and an interval between the centre frequencies which is greater than the bandwidth used for the respective set, with additional information about the split also being sent which can be used to compile the data signal at the receiver end.

2. Method for transmitting data according to Claim 1, **characterized in that** the centre frequencies of the at least two sets are situated in different frequency bands.

3. Method for transmitting data according to Claim 1 or 2, **characterized in that** the at least two sets are modulated in different fashion and/or have different numbers of orthogonal carriers.

4. Method for transmitting data according to Claims 1 to 3, **characterized in that** information about splitting the data and centre frequencies of the sets is transmitted via a separate channel.

5. Method for transmitting data according to Claims 1 to 4, **characterized in that** the synchronization in the receiver is carried out on at least one of the sets transmitted in parallel.

6. Transmitter (1) for transmitting data using a multicarrier transmission method, where the data are modulated onto a set of orthogonal carriers with a short carrier interval with a centre frequency f, the transmitter containing a multiplexer (2), a COFDM encoder (8) connected thereto and a transmission unit (9) connected to the encoder, **characterized in that** the multiplexer (2) contains a demultiplexer (5) which divides the data streams over at least two sets for the purpose of transmission, where the transmitter contains means which transmit the at least two sets with different centre frequencies and an interval between the centre frequencies which is greater than the bandwidth used for the respective set in parallel, and where the transmitter has means for transmitting additional information about the split which can be used to compile the data signal at the receiver end.

7. Transmitter for transmitting data according to Claim 6, **characterized in that** the COFDM encoder (8) contains separate coding units for a respective set.

8. Receiver (11) for receiving transmitted data using a multicarrier transmission method, where the data are modulated onto a set of orthogonal carriers with a short carrier interval with a centre frequency f, the receiver (11) containing a reception unit (25), an analogue/digital converter (16) connected thereto, a COFDM decoder (18) and a DAB demultiplexer (24) connected to the decoder (18), **characterized in that** the reception unit (24) is designed such that it receives a data stream which has been split over at least two sets and also additional information, and **in that** it contains at least bandpass filters (12) for separating the sets and has means which compile the data stream using the additional information.

9. Receiver (11) for receiving transmitted data according to Claim 8, **characterized in that** it contains analogue/digital converters (16) separately for the respective sets.

10. Receiver (11) for receiving transmitted data according to Claim 8 or 9, **characterized in that** it contains one analogue/digital converter (16) for all sets together and **in that** a baseband filter (17) for separating the sets is installed for a respective set.

11. Receiver (11) for receiving transmitted data according to Claims 8 and 9, **characterized in that** a baseband filter (17) which processes all sets using time-division multiplexing is installed.

12. Receiver (11) for receiving transmitted data according to Claims 8 to 11, **characterized in that** the oscillators (14) are coupled to one another.

## Revendications

1. Procédé de transmission de données selon un procédé de transmission à porteuses multiples, selon lequel on module les données sur un ensemble de porteuses orthogonales à faible distance de porteuses avec une fréquence centrale (f),
**caractérisé en ce qu'**
on répartit les données d'un signal et on les envoie en parallèle par au moins deux ensembles avec des fréquences centrales différentes et une distance des fréquences centrales supérieure à la largeur de bande utilisée par chacun des ensembles,
et en outre on assemble des informations complémentaires concernant la répartition à l'aide desquelles on compose le signal de données du côté de la réception.

2. Procédé de transmission de données selon la revendication 1,
**caractérisé en ce que**
les fréquences centrales d'au moins deux ensembles sont situées dans des bandes de fréquences différentes.

3. Procédé de transmission de données selon les revendications 1 ou 2,
**caractérisé en ce qu'**
on module différemment au moins deux ensembles et/ou deux nombres différents de porteuses orthogonales.

4. Procédé de transmission de données selon les revendications 1 à 3,
**caractérisé en ce qu'**
on transmet les informations relatives à la répartitions des données des fréquences centrales des ensembles par un canal distinct.

5. Procédé de transmission de données selon les revendications 1 à 4,
**caractérisé en ce que**
la synchronisation dans le récepteur se fait sur au moins l'un des ensembles transmis en parallèle.

6. Emetteur (1) pour transmettre des données selon un procédé de transmission à porteuses multiples,
les données étant modulées sur un ensemble de porteuses orthogonales à faible distance entre les porteuses et de fréquence centrale (f), l'émetteur comportant un multiplexeur (2) avec un codeur COFDM (8) et une unité d'émission (9) reliée au codeur,
**caractérisé en ce que**
le multiplexeur (2) comporte un demultiplexeur (5) qui pour la transmission, divisent les flux de donnés en au moins deux ensembles, et l'émetteur comporte des moyens émettant en parallèle au moins deux ensembles avec des fréquences centrales différentes et une distance entre les fréquences centrales supérieure à la largeur de bande utilisée par chacun des ensembles, et
l'émetteur comporte des moyens d'émission d'information supplémentaires concernant la répartition à l'aide desquels on assemble le signal de données du côté de la réception.

7. Emetteur pour transmettre des données selon la revendication 6,
**caractérisé en ce que**
le codeur COFDM (8) comporte des unités de codage distinctes pour chaque ensemble.

8. Récepteur (11) pour la réception de données transmises selon un procédé de transmission à porteuses multiples, les données étant modulées sur un ensemble de porteuses orthogonales à faible distance de porteuse avec une fréquence centrale (f),
le récepteur (11) ayant une unité de réception (25), un convertisseur analogique/numérique (16) relié à celle-ci, un décodeur COFDM (18) et un démultiplexeur DAB (24) relié au décodeur (18),
**caractérisé en ce que**
l'unité de réception (24) est conçue pour recevoir un flux de données réparties en au moins deux ensembles ainsi que des informations supplémentaires, et comporte au moins des filtres passe-bande (18) pour séparer les ensembles et des moyens qui composent le flux de données avec des informations supplémentaires.

9. Récepteur (11) pour la réception de données transmises selon la revendication 8,
**caractérisé en ce qu'**
il comporte des convertisseurs analogiques/numériques (16) séparés pour chaque ensemble.

10. Récepteur (11) pour la réception de données transmises selon les revendications 8 ou 9,
**caractérisé en ce qu'**
il comporte un convertisseur analogique/numérique (16) commun à tous les ensembles, et pour séparer les ensembles un filtre à bande passante (17) pour chaque ensemble.

11. Récepteur (11) pour la réception de données transmises selon les revendications 8 et 9,
**caractérisé par**
un filtre passe-bande (17) traitant tous les ensembles selon un procédé de multiplexage dans le temps.

12. Récepteur (11) pour recevoir des données de transmission selon les revendications 8 à 11,
**caractérisé en ce que**
les oscillateurs (14) sont couplés l'un à l'autre.
